(19) Europäisches Patentamt
European Patent Office
Office européen des brevets

(11) **EP 2 023 606 A2**

(12) **EUROPEAN PATENT APPLICATION**

(43) Date of publication:
**11.02.2009 Bulletin 2009/07**

(51) Int Cl.:
***H04N 5/21*** *(2006.01)*

(21) Application number: **08157567.2**

(22) Date of filing: **04.06.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS**<br><br>(30) Priority: **26.07.2007  KR 20070074948** | (71) Applicant: **Samsung Electronics Co., Ltd.**<br>**Suwon-si,**<br>**Gyeonggi-do 442-742 (KR)**<br><br>(72) Inventor: **Park, Eun-kyung**<br>**Gyeonggi-do (KR)**<br><br>(74) Representative: **Brandon, Paul Laurence**<br>**APPLEYARD LEES**<br>**15 Clare Road**<br>**Halifax HX1 2HY (GB)** |

(54) **Image signal processor and method thereof**

(57)     An image signal processor and a method for processing an image signal thereof are disclosed. The image signal processor stores a difference of image signals between a current frame and a previous frame, determines whether the input signal is a moving image or a still image by comparing the difference of image signals between the current frame and a frame prior to the previous frame, and filters the image signals employing a 2D comb filter or 3D comb filter. As a result, a filtering is executed using comb filters proper to a moving image and a still image.

# FIG. 1

EP 2 023 606 A2

**Description**

**BACKGROUND OF THE INVENTION**

1. Field of the Invention

Apparatuses and methods consistent with the present invention relate to an image signal processing.

2. Description of the Related Art

An analog image signal is classified into a composite video blanking and sync (CVBS) signal, a super (S) signal, and a component signal. The CVBS signal combines a luminance (Y) signal and a chrominance (C) signal and is transmitted according to one of a Phase Alternation by Line (PAL) system, a National Television System Committee (NTSC), and Sequential Color with Memory (SECAM).

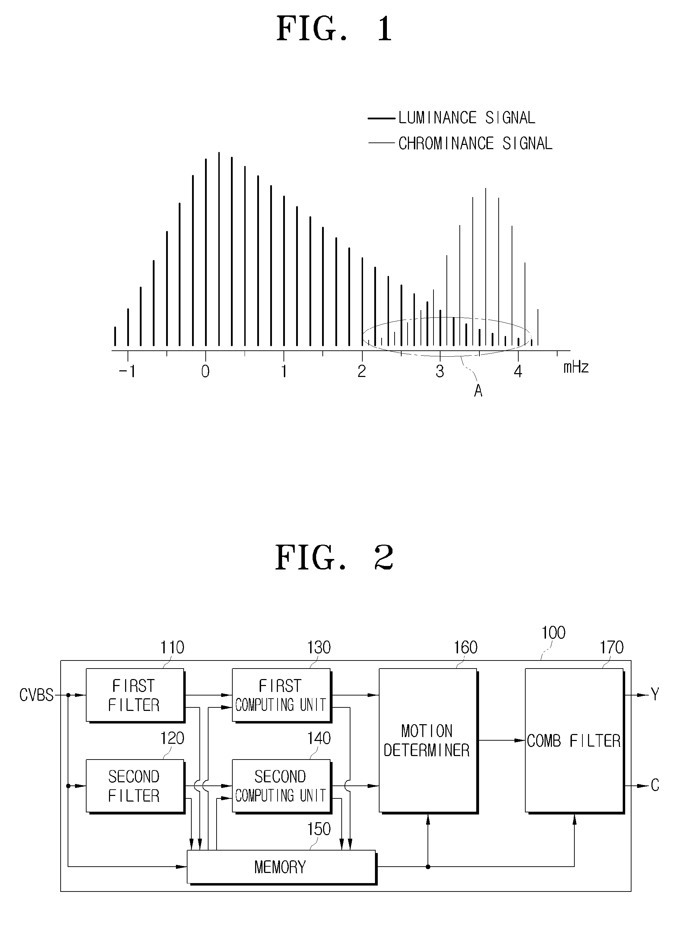

The CVBS signal is transmitted through a single transmission line, which is effective and economical. However, the CVBS signal has to be split into Y signal and C signal, and the split signals have to be processed to be displayed on a screen, which is possible but very difficult. If a bandwidth of the C signal is wider than a standard bandwidth (for example, in case of NTSC, I = 1.3 MHz, Q = 0.6 MHz), as shown in a frequency spectrum illustrated in FIG. 1, a range (A) of overlapping the luminance signal is increased. Accordingly, it is difficult to separate the Y signal from the C signal.

A comb filter separates Y signal from a signal. The comb filter is mainly classified into two different forms, that is, a two-dimensional (2D) comb filter, and a three-dimensional (3D) comb filter. The 2D comb filter is a spatial filter executing a spatial filtering in vertical and horizontal directions, and the 3D comb filter is a temporal filter. As the 3D comb filter executes the temporal filtering, the 3D comb filter is applied to a still image. Accordingly, a moving image employs the 2D comb filter.

The 2D comb filter and 3D comb filter are adaptably employed to a CVBS signal according to whether the CVBS signal is a moving image or still image. However, if an overlapping range (A) of the C signal and Y signal is wide as shown in a frequency spectrum illustrated in FIG. 1, even a still image is determined to be a moving image, and therefore a 2D comb filter is used. As a result, a high frequency element of Y signal is detected as a part of C signal, resulting in a cross color trouble, or a low frequency element of the C signal is detected as a part of Y signal, resulting in a dot crawl.

Although the 2D comb filter and the 3D comb filter are adaptively employed, an image quality of a screen displaying the CVBS signal is degraded.

**SUMMARY OF THE INVENTION**

Exemplary embodiments of the present invention aim to address at least the above problems and/or disadvantages and other disadvantages not described above. Also, the present invention is not required to overcome the disadvantages described above, and an exemplary embodiment of the present invention may not overcome any of the problems described above.

Preferred embodiments of the present invention provide an image signal processor which accurately determines whether a CVBS signal is a moving image or a still image by comparing differences between L signals between frames to improve an image quality, and a method for processing an image signal thereof.

According to an aspect of the present invention, there is provided an image signal processor, comprising a memory which stores a difference between image signals of a current frame and a previous frame; a determiner which determines a degree of motion by comparing the difference between the image signals of the current frame and the previous frame with a difference between image signals of the current frame and a frame prior to the previous frame; and a filter which filters an image signal of a first format according to a result of the determination, and outputs the filtered image signal as an image signal of a second format.

The determiner may compare the difference between the image signals of the current frame and the previous frame with the difference between the image signals of the current frame and the frame prior to the previous frame, and if a difference between the differences is within a predetermined range, determine the image of the first format to be a still image.

The determiner may compare the difference between the image signals of the current frame and the previous frame with the difference between the image signals of the current frame and the frame prior to the previous frame, and if a difference between the differences exceeds a predetermined range, determine the image signal of the first format to be a moving image.

The image signal of the first format may be a CVBS signal, and the image signal of the second format may be Y/C signals.

The filter may adaptively employ a two-dimensional (2D) filter and a three-dimension (3D) filter for the image signal of the first format according to a result of the determiner, to output an image signal of the second format.

The image signal processor may further comprise a first computing unit which computes a difference between Y signals of the image signals; and a second computing unit which computes a difference between C signals of the image signals, wherein the determiner determines a degree of motion by comparing a difference between image signals of a current frame and a previous frame computed from the first and second computing units with the difference between the image signals of the current frame and the frame prior to the previous frame.

The image signal processor may further comprise a first filter which employs a low pass filter (LPF) to the image signal to output a Y signal; and a second filter which employs either a high pass filter (HPF) or a band pass filter (BPF) to the image signal to output a C signal.

According to another aspect of the present invention, there is provided a method for processing an image signal, comprising storing a difference between image signals of a current frame and a previous frame; determining a degree of motion by comparing the difference between the image signals of the current frame and the previous frame with a difference between image signals of the current frame and a frame prior to the previous frame; and filtering an image signal of a first format according to a result of the determining, and outputting the filtered image signal as an image signal of a second format.

The determining may compare the difference between the image signals of the current frame and the previous frame with the difference between the image signals of the current frame and the frame prior to the previous frame, and if a difference between the differences is within a predetermined range, determine the image of the first format to be a still image.

The determining may compare the difference between the image signals of the current frame and the previous frame with the difference between the image signals of the current frame and the frame prior to the previous frame, and if a difference between the differences exceeds a predetermined range, determine the image signal of the first format to be a moving image.

The image signal of the first format may be a CVBS signal, and the image signal of the second format may be Y/C signals.

The outputting may adaptively employ a 2D filter and a 3D filter to the image signal of the first format according to a result of the determiner, to output an image signal of the second format.

The method may further comprise computing a difference between Y signals of the image signals; and computing a difference between C signals of the image signals, wherein the determining determines a degree of motion by comparing a difference between image signals of a current frame and a previous frame with the difference between the image signals of the current frame and the frame prior to the previous frame.

The method may further comprise employing an LPF to the image signal to output a Y signal; and employing either an HPF or a BPF to the image signal to output a C signal.

**BRIEF DESCRIPTION OF THE DRAWINGS**

The present invention will be more apparent by describing certain exemplary embodiments of the present invention with reference to the accompanying drawings, in which:

FIG. 1 is a view illustrating a frequency spectrum of a CVBS signal;

FIG. 2 is a block diagram illustrating an image signal processor according to an exemplary embodiment of the present invention;

FIG. 3 is a view illustrating an operation of an image signal processor according to an exemplary embodiment of the present invention; and

FIG. 4 is a flowchart illustrating an operation of an image signal processor according to an exemplary embodiment of the present invention.

**DETAILED DESCRIPTION OF EXEMPLARY EMBODIMENTS OF THE INVENTION**

Certain exemplary embodiments of the present invention will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Thus, it is apparent that the present invention can be carried out without those specifically defined matters. Also, well-known functions or constructions are not described in detail since they would obscure the invention with unnecessary detail.

FIG. 2 is a block diagram illustrating an image signal processor according to an exemplary embodiment of the present invention.

Referring to FIG. 2, an image signal processor 100 according to an exemplary embodiment of the present invention may include a first filter 110, a second filter 120, a first computing unit 130, a second computing unit 140, a memory 150, a motion determiner 160, and a comb filter 170.

The first filter 110 may include an LPF which filters an input CVBS signal. The first filter 110 filters the CVBS signal to output a Y signal. For example, in NTSC, the CVBS signal consists of a C signal having a center frequency of approximately 3.58 MHz and a Y signal having a center frequency lower than that of the C signal. The first filter 110 outputs the CVBS signal by passing only the Y signal, that is low frequency element, of the CVBS signal.

The second filter 120 may include an HPF which filters an input CVBS signal, or a BPF which filters an input CVBS signal. The second filter 120 filters the CVBS signal to output a C signal. That is, the second filter 120 outputs the CVBS signal by passing only the C signal, that is high frequency element, of the CVBS signal through the HPF or BPF.

The first computing unit 130 computes a first difference ($\triangle$ Y1) of between a Y signal of an image signal of a frame (N) and a Y signal of an image signal of a frame (N-1), and outputs the computed first difference ($\triangle$ Y1). The first computing unit 130 computes a third difference ($\triangle$ Y3) between the Y signal of the image signal of the frame (N) and a Y signal of an image signal of a frame (N-3), and outputs the computed third difference (△ Y3).

The second computing unit 140 computes a first difference (△ C1) between a C signal of the image signal of the frame (N) and a C signal of the image signal of the frame (N-1), and outputs the computed first difference (△ C1). The second computing unit 140 computes a third difference (△ C3) between the C signal of the image signal of the frame (N) and a C signal of the image signal of a frame (N-3), and outputs the computed third difference (△ C3).

The memory 150 stores CVBS signals of the frames N and (N-1). The memory 150 stores the Y signal and C signal output from the first and second filters 110, 120. The memory 150 stores the first difference (△ Y1) between the Y signals output from the first computing unit 130 and the first difference (△ C1) between the C signals output from the second computing unit 140 as a difference (△ D1) of image signals between a first frame and a second frame.

The motion determiner 160 compares a difference (△ D3) between the image signals of the frame (N) and the frame (N-3) with a difference (△ D1) between image signals of the frame (N) and the frame (N-1) stored in the memory 150 to determine a degree of motion. If the difference between the two differences (△ D1 and △ D3) does not exceed a predetermined range, the motion determiner 160 determines that the input CVBS signal is a still image, and outputs a result. If the difference between the two differences (△ D1 and △ D3) exceeds a predetermined range, the motion determiner 160 determines that the input CVBS signal is a moving image, and outputs a result. That is, the motion determiner 160 outputs a performance factor to set portions of performing the 2D comb filter and 3D comb filter on an image according to whether the input CVBS signal is a still image or a moving image.

The comb filter 170 filters the CVBS signal according to the result of the motion determiner 160, and outputs the filtered CVBS signal as Y/C signals. That is, the comb filter 170 employs adaptively the 2D comb filter or the 3D comb filter for the CVBS signals of the frames (N) and (N-1) stored in the memory 150 to output the Y/C signals. In other words, the comb filter 170 executes a spatial filtering if an image signal is determined as a still image, and executes a temporal filtering if an image signal is determined as a moving image according to the performance factor, to separate the CVBS signal into Y/C signals and output results.

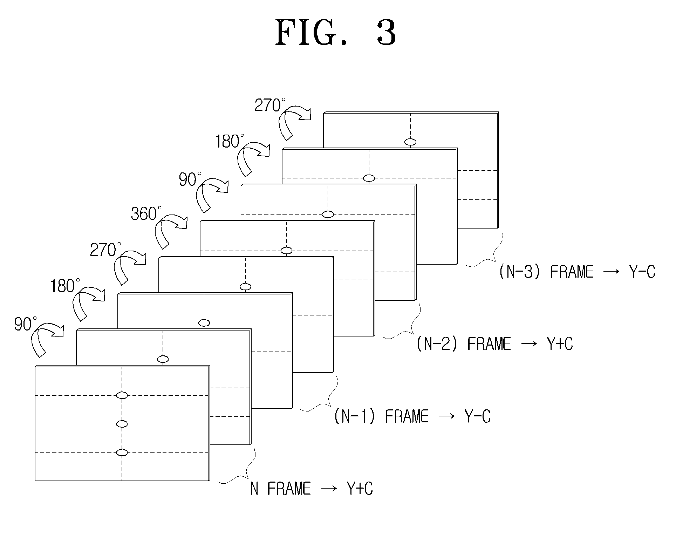

An operation of the image signal processor 100 will be explained in detail with reference to FIG. 3.

FIG. 3 is a view illustrating an operation of an image signal processor according to an exemplary embodiment of the present invention.

Referring to FIG. 3, one frame consists of two fields having a phase difference 90°, and each frame has a phase difference 180°. That is, a phase difference between the frame (N) and the frame (N-1) is 180°, a phase difference between the frame (N-1) and the frame (N-2) is 180°, and a phase difference between the frame (N-2) and the frame (N-3) is 180 °. Equation 1 expresses a difference (△ D1) between image signals of the frame (N) and the frame (N-1), a difference (△ D2) between image signals of the frame (N) and the frame (N-2), and a difference (△ D3) between image signals of the frame (N) and the frame (N-3).

【Equation 1】

$$\triangle D1 = Abs \triangle Y1 + Abs2C$$

$$\triangle D2 = Abs \triangle Y2 + Abs \triangle C$$

$$\triangle D3 = Abs \triangle Y3 + Abs2C$$

where 'Abs' represents an absolute value.

The first computing unit 130 and the second computing unit 140 compute the difference (△ D 1) between the image signals of the frame (N) and the frame (N-1), and the difference (△ D3) between the image signals of the frame (N) and the frame (N-3) as expressed in Equation 1.

The memory 150 stores the difference (△ D1) between the image signals. The motion determiner 160 compares the difference (△ D1) stored in the memory 150 with the difference (△ D3) between the image signals of the frame (N) and the frame (N-3) output from the first and second computing units 130, 140 to determine a degree of motion.

When a bandwidth of C signal of a still image falls within a range of a standard bandwidth (for example, in case of NTSC, I = 1.3 MHz, Q = 0.6 MHz), 'Abs2C' in Mathematical Formula 1 is nearly 0. However, when a bandwidth of C signal of a still image is wider than a standard bandwidth, 'Abs2C' in Mathematical Formula 1 is greater than 0. If the difference between the differences (△ D1, △ D3) of an image signal is within a predetermined range, the image is determined to be a still image in the exemplary embodiment of the present invention. That is, if the differences (△ D1, △ D3) are close to each other, the motion determiner 160 determines that the image does not have a motion, and decides a performance factor to increase a performance portion of the 3D comb filter.

The comb filter 170 adaptively employs the 2D or 3D comb filter to the frame (N) and frame (N-1) stored in the memory 150 according to the determining result by the motion detector 160 to output the CVBS signal in Y/C signals.

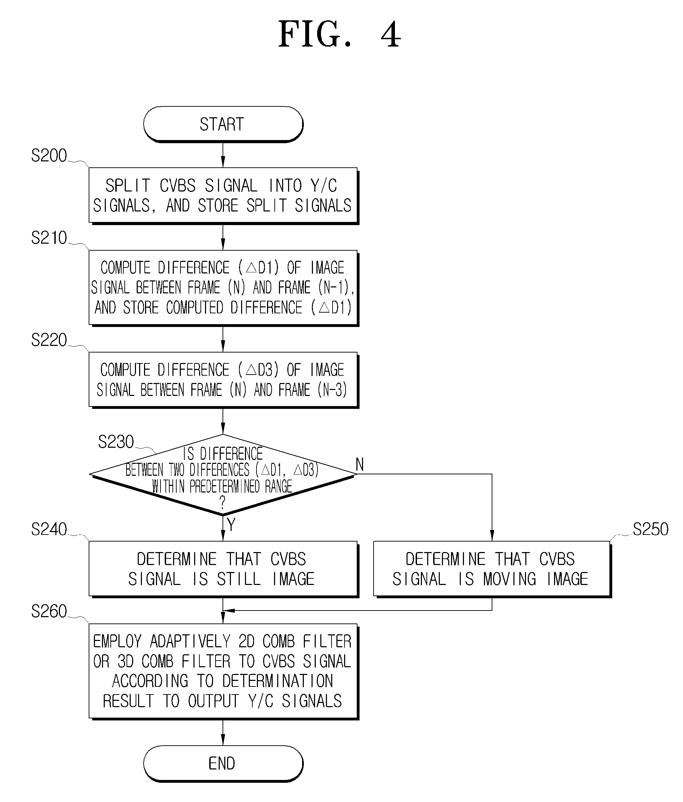

FIG. 4 is a flowchart illustrating an operation of an image signal processor according to an exemplary embodiment of the present invention.

Referring to FIG. 4, the image signal processor 100 splits the CVBS signal into Y/C signals, and stores the split signals (S200). That is, the image signal processor 100 filters the image signal of the frame (N) through the first filter 110 and the second filter 120, splits the filtered signal into Y/C signals, and stores the split signals in the memory 150.

The image signal processor 100 computes the difference ($\triangle$ D1) between the image signals of the frame (N) and the frame (N-1), and stores the computed difference ($\triangle$ D1) (S210). More particularly, the first and second computing units 130, 140 compute differences ($\triangle$ Y1 and $\triangle$ C1) between the Y/C signals included in the image signal of the frame (N) and frame (N-1), and stores the computed differences in the memory 150 as the difference ($\triangle$ D1) of the image signal.

The image signal processor 100 computes the difference ($\triangle$ D3) between the image signals of the frame (N) and the frame (N-3) (S220). That is, the first computing unit 130 and the second computing unit 140 compute differences ($\triangle$ Y3 and $\triangle$ C3) between the Y/C signals included in the frame (N) and frame (N-3), and output the computed differences as a difference ($\triangle$ D3) of the image signal between the frame (N) and frame (N-3).

The motion determiner 160 compares two differences ($\triangle$ D1 and $\triangle$ D3). If a difference between the two differences ($\triangle$ D1 and $\triangle$ D3) is within a predetermined range (S230-Y), the motion determiner 160 determines that the CVBS signal is a still image (S240).

If a difference between the two differences ($\triangle$ D1 and $\triangle$ D3) exceeds a predetermined range (S230-N), the motion determiner 160 determines that the CVBS signal is a moving image (S250).

The comb filter 170 employs adaptively the 2D comb filter or the 3D comb filter to the CVBS signal to output Y/C signals according to the result of operations S240 and S250 (S260).

As doing so, it is possible to separate the CVBS signal into Y/C signals and output the results. While a degree of motion is determined based on the comparison between a difference between image signals of the frame (N) and the frame (N-1) and a difference between image signals of the frame (N) and the frame (N-3) according to the exemplary embodiment of the present invention, the degree of motion may be determined by comparing a difference of image signals of frames above frame (N-5).

According to the preferred embodiments of the present invention, whether a CVBS signal is a moving image or a still image is accurately determined, and a 2D comb filter and a 3D comb filter are adaptively employed. As a result, an image quality is improved.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. An image signal processor comprising:

   a memory (150) in which a difference between image signals of a current frame and a previous frame is stored;
   a determiner (160) which determines a degree of motion by comparing the difference between the image signals of the current frame and the previous frame with a difference between image signals of the current frame and a frame prior to the previous frame; and
   a filter (110,120,170) which filters an image signal of a first format according to a result of the determination by the determiner, and outputs the filtered image signal as an image signal of a second format.

2. The image signal processor of claim 1, wherein the determiner (160) compares the difference between the image signals of the current frame and the previous frame with the difference between the image signals of the current frame and the frame prior to the previous frame, and if a difference between the differences is within a predetermined range, determines the image of the first format to be a still image.

3. The image signal processor of claim 1, wherein the determiner (160) compares the difference between the image signals of the current frame and the previous frame with the difference between the image signals of the current frame and the frame prior to the previous frame, and if a difference between the differences exceeds a predetermined range, determines the image signal of the first format to be a moving image.

4. The image signal processor of any preceding claim, wherein the image signal of the first format is a composite video blanking and sync signal, and the image signal of the second format is luminance/chrominance signals.

5. The image signal processor of any preceding claim, wherein the filter comprises a two-dimensional filter (110) and a three-dimension filter (120) which adaptively filter the image signal of the first format according to a result of the determination by the determiner, to output the image signal of the second format.

6. The image signal processor of any preceding claim further comprising:

   a first computing unit (130) which computes a difference between luminance signals of the image signals; and
   a second computing unit (140) which computes a difference between chrominance signals of the image signals,
   wherein the determiner (160) determines the degree of motion by comparing a difference between image signals of the current frame and the previous frame computed by the first and second computing units with the difference between the image signals of the current frame and the frame prior to the previous frame.

7. The image signal processor of any preceding claim, further comprising:

   a first filter (110) which filters the image signal using a low pass filter to output a luminance signal; and
   a second filter (120) which filters the image signal using one of a high pass filter and a band pass filter to output a chrominance signal.

8. A method for processing an image signal, the method comprising:

   storing a difference between image signals of a current frame and a previous frame;
determining a degree of motion by comparing the difference between the image signals of the current frame and the previous frame with a difference between image signals of the current frame and a frame prior to the previous frame; and
filtering an image signal of a first format according to a result of the determining, and outputting the filtered image signal as an image signal of a second format.

9. The method of claim 8, wherein the determining comprises comparing the difference between the image signals of the current frame and the previous frame with the difference between the image signals of the current frame and the frame prior to the previous frame, and if a difference between the differences is within a predetermined range, determining the image of the first format to be a still image.

10. The method of claim 8, wherein the determining comprises comparing the difference between the image signals of the current frame and the previous frame with the difference between the image signals of the current frame and the frame prior to the previous frame, and if a difference between the differences exceeds a predetermined range, determining the image signal of the first format to be a moving image.

11. The method of any one of claims 8-10, wherein the image signal of the first format is a Composite Video Blanking and Sync signal, and the image signal of the second format is luminance/chrominance signals.

12. The method of any one of claims 8-11, wherein the outputting comprises adaptively filtering the image signal using one of a two-dimensional (2D) filter and a three-dimension (3D) filter according to a result of the determining, to output the image signal of the second format.

13. The method of any one of claims 8-12, further comprising:

   computing a difference between Y signals of the image signals; and
   computing a difference between C signals of the image signals,
   wherein the determining determines the degree of motion by comparing a difference between image signals of the current frame and the previous frame with the difference between the image signals of the current frame and the frame prior to the previous frame.

14. The method of any one of claims 8-13, further comprising:

filtering the image signal using a low pass filter to output a Y signal; and
filtering the image signal using one of a high pass filter and a band pass filter to output a C signal.

# FIG. 1

—— LUMINANCE SIGNAL

—— CHROMINANCE SIGNAL

# FIG. 2

# FIG. 3

270°
180°
90°
360°
270°
180°
90°

(N-3) FRAME → Y-C

(N-2) FRAME → Y+C

(N-1) FRAME → Y-C

N FRAME → Y+C

# FIG. 4

```
                    ┌──────────────────┐
                    │      START       │
                    └────────┬─────────┘
                             │
S200    ┌────────────────────▼────────────────────┐
        │  SPLIT CVBS SIGNAL INTO Y/C              │
        │  SIGNALS, AND STORE SPLIT SIGNALS        │
        └────────────────────┬────────────────────┘
                             │
S210    ┌────────────────────▼────────────────────┐
        │  COMPUTE DIFFERENCE (△D1) OF IMAGE       │
        │  SIGNAL BETWEEN FRAME (N) AND FRAME (N-1),│
        │  AND STORE COMPUTED DIFFERENCE (△D1)     │
        └────────────────────┬────────────────────┘
                             │
S220    ┌────────────────────▼────────────────────┐
        │  COMPUTE DIFFERENCE (△D3) OF IMAGE       │
        │  SIGNAL BETWEEN FRAME (N) AND FRAME (N-3) │
        └────────────────────┬────────────────────┘
                             │
S230                ╱────────▼────────╲
              ╱   IS DIFFERENCE         ╲
        ╱ BETWEEN TWO DIFFERENCES (△D1, △D3) ╲  N
        ╲    WITHIN PREDETERMINED RANGE      ╱─────────┐
              ╲         ?          ╱                    │
                ╲──────┬──────╱                         │
                       │ Y                              │
S240    ┌──────────────▼───────────┐   S250  ┌──────────▼───────────┐
        │  DETERMINE THAT CVBS      │         │  DETERMINE THAT CVBS  │
        │  SIGNAL IS STILL IMAGE     │         │  SIGNAL IS MOVING IMAGE│
        └──────────────┬───────────┘         └──────────┬───────────┘
                       │◄───────────────────────────────┘
S260    ┌──────────────▼───────────┐
        │ EMPLOY ADAPTIVELY 2D COMB FILTER│
        │ OR 3D COMB FILTER TO CVBS SIGNAL │
        │ ACCORDING TO DETERMINATION      │
        │ RESULT TO OUTPUT Y/C SIGNALS    │
        └──────────────┬───────────┘
                       │
                ┌──────▼──────┐
                │     END     │
                └─────────────┘
```